(19) Europäisches Patentamt
European Patent Office
Office européen des brevets

(11) **EP 1 967 243 A1**

(12) **EUROPEAN PATENT APPLICATION**
published in accordance with Art. 158(3) EPC

(43) Date of publication:
**10.09.2008 Bulletin 2008/37**

(51) Int Cl.:
**B01D 3/42** (2006.01)      **B01D 3/00** (2006.01)

(21) Application number: **06834775.6**

(86) International application number:
**PCT/JP2006/325032**

(22) Date of filing: **15.12.2006**

(87) International publication number:
**WO 2007/069718 (21.06.2007 Gazette 2007/25)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.12.2005 JP 2005363928**

(71) Applicant: **Techno Sigma Co., Ltd.**
**Okayama-shi**
**Okayama 701-2141 (JP)**

(72) Inventors:
• **TORII, Shigeru**
  **Okoyama 709-0827 (JP)**
• **MIKI, Kouichi**
  **Okayama 704-8138 (JP)**
• **KORETOMO, Katsumi**
  **Okayama 703-8201 (JP)**

(74) Representative: **Green, Mark Charles et al**
**Urquhart-Dykes & Lord LLP**
**30 Welbeck Street**
**London W1G 8ER (GB)**

(54) **VAPORIZING SEPARATOR FOR LIQUID MEDIUM AND THE LIKE**

(57)  To provide an apparatus for gasifying and separating a liquid medium, which is of an automatic type and which can be increased in size.

An apparatus for gasifying and separating a liquid medium and a mixture, comprising a gasifying means, in which one liquid selected from a liquid medium and a mixture of the liquid medium and a nonvolatile substance is stored to form a liquid surface of the liquid, for gasifying the liquid medium to form a gasified medium, and a separating means for cooling gas and the gasified medium discharged from the gasifying means to condense the gasified medium, separating the condensed medium from the gas, the apparatus comprising: pressure detecting means for detecting a pressure of the gas; a differential pressure detecting means for detecting a differential pressure between a pressure in the gasifying means at a predetermined position and the pressure of the gas; and a calculating means for calculating the liquid surface position of the liquid from the predetermined position as a base position based on the pressure of the gas and the differential pressure to determine a calculated liquid surface position, wherein the surface position of the liquid varies due to gasification of the liquid, wherein the calculated liquid surface position is a liquid surface position corresponding to the surface position obtained when the liquid is still.

Fig. 4

**Description**

Field of the Invention

The present invention relates to an apparatus for gasifying and separating a liquid medium or the like, which is an automatic apparatus advantageous not only in that it can measure a varying surface position of a liquid medium or the like with high accuracy, but also in that it can be increased in size.

Background Art

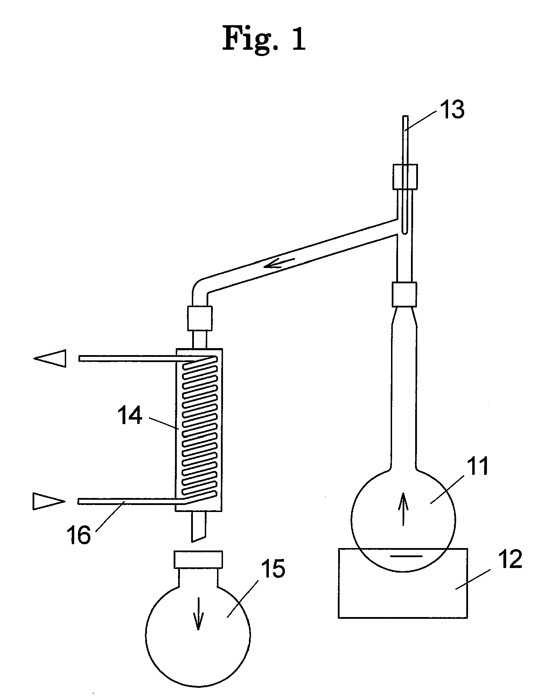

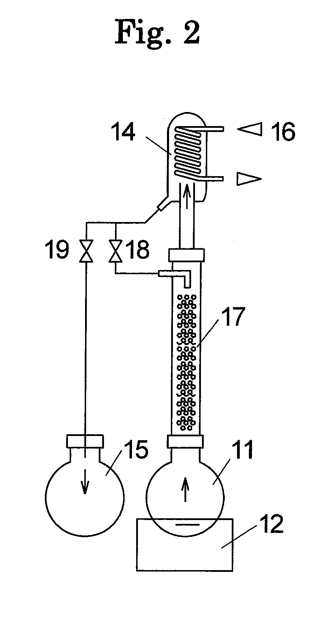

In recent years, there is increasing concern about environment problems, and, for controlling the chemical substances and others that are possibly harmful to human health and ecosystem, international standards, such as ISO, and laws, such as PRTR (Pollutant Release and Transfer Register), are prepared. For dealing with such movements, reusing the used liquid medium and others to reduce the amount of the solvent discharged has attracted attention, and, as apparatuses for this purpose, recently, a variety of separation apparatuses named, e.g., organic solvent distillation apparatus, solvent recycling apparatus, and automatic solvent recovery apparatus have come onto the market.
Conventional apparatuses separate a medium based on the principle of distillation under atmospheric pressure or a reduced pressure (a method in which a solvent is heated to its boiling point to generate saturated vapor and the saturated vapor is separated off), and diagrammatic views of the apparatuses are shown in Fig. 1 and Fig. 2. Reference numerals in the figures designate respective parts as follows: 11: distilling round-bottom flask; 12: heating bath; 13: thermometer; 14: condenser; 15: recovery receiver; 16: coolant connection port; 17: column tower; and 18: solenoid valve. Fig. 1 is a simple distillation apparatus generally used for organic solvent, in which solvent vapor formed by boiling a solvent is led to a condenser portion (condenser 14) where the vapor is condensed and separated. The distillation apparatus of Fig. 2 is an apparatus which separates and purifies a mixed solvent comprising two or more solvents into the individual solvents of single component. In this apparatus, a distilling portion is filled with a solvent, distilling round-bottom flask 11 in the distilling portion is joined to a vertical fractional distillation portion (column tower 17), a condenser portion (condenser 14) is joined to the upper part of the column, and a branch pipe extends from the condenser portion and is connected to recovery receiver 15. The apparatus has a design such that the branch pipe is further branched before the receiver to achieve reflux of part of the condensate toward the upper part of fractional distillation column tower 17. The recovery and reflux are controlled by solenoid valves 18, 19 and others, thus enabling fractional distillation of solvents. That is, the apparatus purifies a mixed solvent by boiling the organic solvents and appropriately switching the reflux and fractionation. The end point of the distillation is checked by visual observation or manual operation using, e.g., an indication of an instrument.
For example, a method is disclosed in which used waste liquor comprising n-butanol, butyl acetate, water, 2-butoxyethanol, and 2-hexyloxyethanol is separated by precipitation into an aqueous phase and a solvent phase of high-purity n-butanol and water, and fractionating is repeated under a reduced pressure to recover the solvents (patent document 1). However, this purification method is performed according to an empirical method such that the solvents are boiled and distilled, and is a method by manual operation like the above method.
These apparatuses have the following drawbacks. (1) A solvent vapor pressure is utilized, and hence there is a need to heat a solvent to a temperature of its boiling point or higher. Therefore, when, e.g., a liquid medium having a low flash point is used, constantly taking care to prevent flaming is indispensable from the viewpoint of achieving safe operations. (2) In the conventional apparatus which is not of a circulation system, the mechanisms of automating the addition of a solvent, the withdrawal of a purified solvent, and the discharge of concentrated mother liquor for continuously operating the apparatus are complicated due to the restrictions by the structure. (3) There are many problems to be solved, e.g., complicated structure of the apparatus and cumbersome operations. Most of the prior art techniques for purifying a great amount of a liquid medium or the like are of a batch-wise system, and there are no productive facilities of a so-called completely automatic recovery system for liquid medium or the like in which gas to be forcibly brought into contact with a liquid medium or the like is allowed to circulate through an apparatus for recovery of a liquid medium or the like to recover and separate the medium. Further, in many apparatuses which are commercially available and practically used, any of operations of, e.g., charging a liquid medium or the like, discharging the recovered liquid from a receiver, and discharging the residue from an evaporator are merely partially automated. Therefore, the development of a large-sized solvent recovery apparatus having a mechanism for preventing a bumping phenomenon is strongly desired.
For preventing a bumping phenomenon, conventionally, a barrier for preventing the unpurified liquid from being mixed into the recovered liquid is formed. However, there are problems in that the form of vaporizer is complicated and the materials usable in such processing for the vaporizer are restricted.
Further, studies are made on the precise control of a liquid surface position in the vaporizer portion to solve the above problems including the occurrence of a bumping phenomenon. With respect to the method of sensing a liquid surface position, an electrostatic method, a float switch method, an electrode method, an ultrasonic method, a vibration method, a photosensor method, or the like is used. A level gage of an electrostatic method, an electrode method, or an ultrasonic method has a problem to be solved in the direct measurement in a concentration vessel such that sensing a liquid surface position using, for example, a change of the capacitance or conductivity or an ultrasonic waveform causes the measurement in a solid mixed solution system to be inaccurate, and hence the level gage of this type has not yet been applied to a large-sized apparatus. In a rotating container, such as a rotary evaporator, a surface position of liquid varies, and therefore it is difficult to use a float switch. On the other hand, a closed evaporator made of stainless steel has a disadvantage in that external light cannot pass through the liquid phase in the evaporator, and hence it is basically unsuitable for automatic sensing.

For example, a method has been known in which an evaporation promoting means (rotary disc) is provided in a reservoir having therein a circulation path through which gas is caused to flow due to an air fan means and a liquid surface position in the reservoir is detected (patent document 2). However, this method has a problem in that the form of vaporizer is complicated.

In a method in which gasification is promoted by rotating a vaporizer at an angle to increase the liquid area, it is known that a liquid surface position which is three-dimensionally varying is detected by means of, e.g., a photosensor or a CCD sensor. When using a photosensor (patent document 3), there is a problem in that the container must be transparent and the usable materials are restricted, making it difficult to automate the apparatus and increase the size of apparatus. When using a CCD sensor (patent document 4), there is a problem in that image processing for the continuously varying liquid surface is complicated, making it difficult to increase the size of apparatus.

A method using a differential pressure gauge and a weight meter in combination has been known (patent document 5). In the detection of a liquid surface position using a differential pressure gauge, a difference between a pressure of the liquid phase in the container and a pressure of the gas phase in the container is detected and a liquid surface position is specified from the resultant differential pressure utilizing a principle such that the differential pressure corresponds to the head pressure of a detection tube provided in the liquid phase. When a liquid surface position is measured using only a differential pressure gauge, the accuracy of measurement is low, and therefore calibration is made also using a weight meter to improve the accuracy of measurement to a required level.

However, measurement for a varying liquid surface (for example, a surface of the liquid being stirred or mixed) by the method using a differential pressure gauge and a weight meter in combination is difficult. In this measurement, the accuracy of detection of a liquid surface position is lower than the required level. Even when calibration is made using a weight meter or means of a differential pressure gauge and a weight meter and the like are used in combination, it is difficult to specify a varying liquid surface position.

In any of the above methods, a varying liquid surface position cannot be measured while maintaining a series of gasification-separation operations including charging of the liquid to be purified into a distillation apparatus, discharging of the purified liquid, and discharging of the residue in the required level or cost. Therefore, a gasifying and separating apparatus having a mechanism for enabling continuous measurement of a varying liquid surface position so that a liquid medium or the like can be continuously evaporated and recovered is desired.

[Patent document 1] Japanese Unexamined Patent Publication No. Hei 4-86978
[Patent document 2] Japanese Unexamined Patent Publication No. 2000-202201
[Patent document 3] Japanese Utility Model Publication No. Hei 5-7301
[Patent document 4] Japanese Unexamined Patent Publication No. 2004-148169
[Patent document 5] Japanese Unexamined Patent Publication No. Hei 10-328548

DISCLOSURE OF THE INVENTION

Problems to be Solved by the Invention

An object of the present invention is to solve the problems of the above conventional apparatus, and to provide a novel apparatus which is advantageous in that the subject of treatment, such as a liquid medium or a mixture, can be gasified and separated under any pressure conditions due to automatic control by measuring a varying liquid surface position of a liquid medium or the like.

Means to Solve the Problems

The present invention is an apparatus for gasifying and separating a liquid medium and a mixture, comprising a gasifying means, in which one liquid selected from a liquid medium and a mixture of the liquid medium and a nonvolatile substance is stored to form a liquid surface of the liquid, for gasifying the liquid medium to form a gasified medium, and a separating means for cooling gas and the gasified medium discharged from the gasifying means to condense the gasified medium, separating the condensed medium from the gas,
the apparatus comprising:

a pressure detecting means for detecting a pressure of the gas;
a differential pressure detecting means for detecting a differential pressure between a pressure in the gasifying means at a predetermined position and the pressure of the gas; and
a calculating means for calculating a liquid surface position of the liquid from the predetermined position as a base position based on the pressure of the gas and the differential pressure to determine a calculated liquid surface position,

wherein the surface position of the liquid varies due to gasification of the liquid,
wherein the calculated liquid surface position is a liquid surface position corresponding to the surface position obtained when the liquid is still.

The present invention is an apparatus which is advantageous not only in that a varying liquid surface position of a liquid is measured to check the amount of the charged solution to be purified, but also in that the prevention of a bumping phenomenon or the like is automatically performed. The apparatus does not achieve a partially automated system which requires a manual operation of an operator or monitoring but a completely automated control system.

Effect of the Invention

The apparatus of the present invention is an apparatus for gasifying and separating a liquid medium or the like, which is advantageous not only in that it can measure a varying liquid surface position of a liquid medium or the like with high accuracy, but also in that it can be increased in size. Further, the apparatus has the following advantages. A wide range of the subjects of treatment and conditions for operation can be used. The control mechanism can be automated, and hence a safety mechanism conventionally required is not needed, thus achieving high reliability and safety. In addition, the apparatus can reduce the cost.

BRIEF DESCRIPTION OF THE DRAWINGS

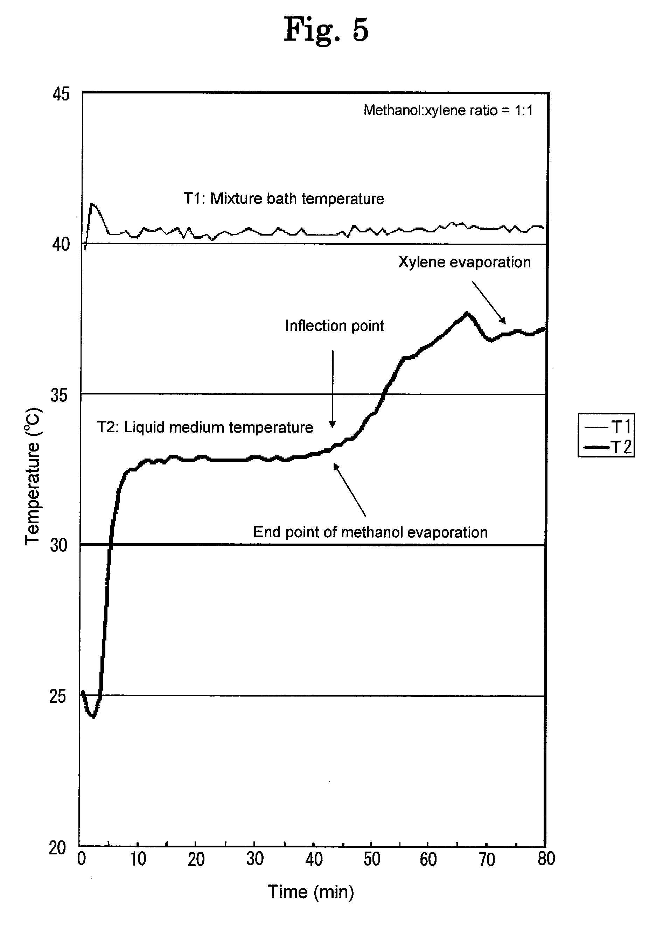

[Fig. 1]
Fig. 1 is a diagrammatic view showing a conventional simple distillation apparatus for organic solvent.
[Fig. 2]
Fig. 2 is a diagrammatic view showing a conventional fractional distillation apparatus for organic solvent.
[Fig. 3]

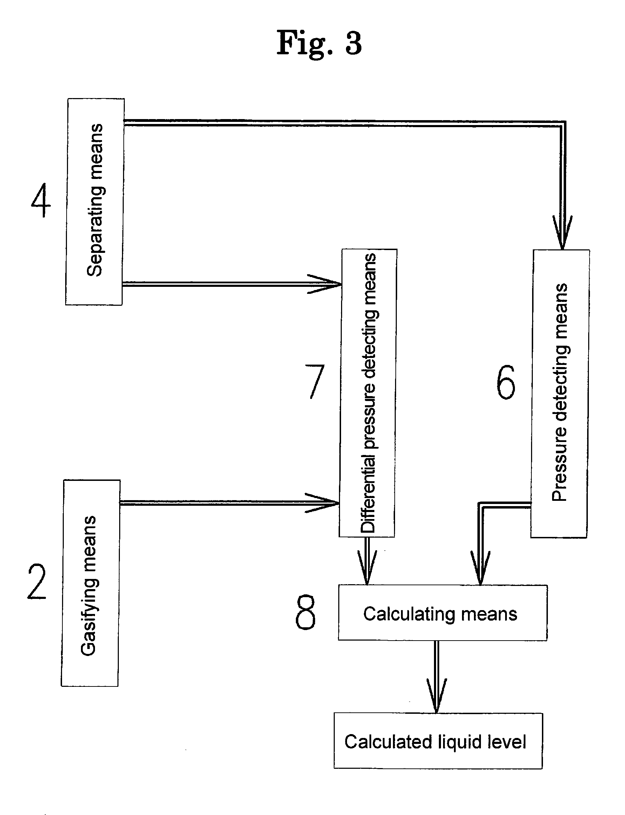

Fig. 3 is a block diagram showing the function of the apparatus for gasifying and separating a liquid medium or the like of the present invention.
[Fig. 4]

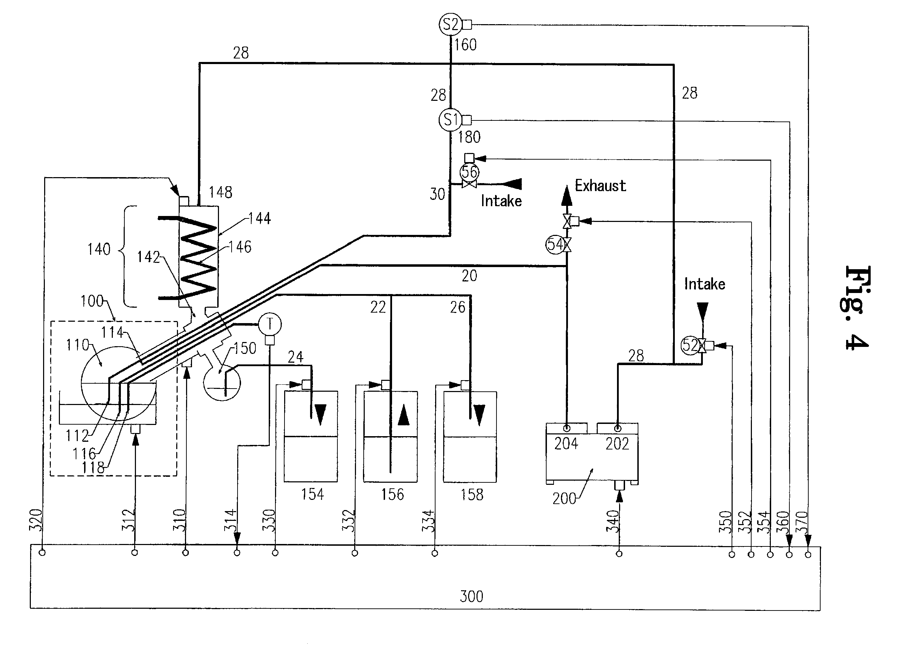

Fig. 4 is a diagrammatic view showing the apparatus for gasifying and separating a liquid medium or the like of the present invention.
[Fig. 5]
A graph showing a change with time of the liquid temperature in container 110 in separating a low boiling-point liquid medium and a high boiling-point liquid medium using the apparatus for gasifying and separating a liquid medium or the like of the present invention is shown in Fig. 5.

BEST MODE FOR CARRYING OUT THE INVENTION

Fig. 3 is a block diagram showing the construction of the apparatus of the present invention.
As shown in Fig. 3, gasifying-separating apparatus 10 of the present invention comprises gasifying means 2, separating means 4, pressure detecting means 6, differential pressure detecting means 7, and calculating means 8. In Fig. 3, a signal for a pressure of gas is generated from pressure detecting means 6 and sent to calculating means 8, and a signal for a differential pressure between a pressure in gasifying means 2 at a predetermined position and the pressure of gas is generated from differential pressure detecting means 7 and sent to calculating means 8, and calculating means 8 determines a calculated liquid surface position.
Gasifying means 2 is a gasifying means in which one liquid selected from a liquid medium and a mixture of the liquid medium and a nonvolatile substance is stored to form a liquid surface of the liquid, and gasifies the liquid medium to form a gasified medium.

Separating means 4 cools gas and the gasified medium discharged from gasifying means 2 to condense the gasified medium, separating the condensed medium from the gas.

Pressure detecting means 6 detects a pressure of the gas.

Differential pressure detecting means 7 detects a differential pressure between a pressure in gasifying means 2 at a predetermined position and the pressure of the gas. The predetermined position means a predetermined position in gasifying means 2, which is below first to third liquid surface positions. When the predetermined position is above the liquid surface position, a differential pressure is not caused and hence is 0. When the predetermined position is below the liquid surface position, a differential pressure is caused. When the predetermined position is below the liquid surface position, the larger the depth of the position, the larger the differential pressure.

Calculating means 8 calculates the liquid surface position of the liquid from the predetermined position in the gasifying means as a base position based on the pressure of the gas detected by pressure detecting means 6 and the differential pressure detected by differential pressure detecting means 7 to determine a calculated liquid surface position. The differential pressure is proportional to the depth of the liquid, and therefore a depth of a predetermined position from the liquid surface position of the liquid is determined by dividing a differential pressure by an area of the liquid obtained from the form of a container containing the liquid. It is preferred that a liquid surface position corresponding to the surface position obtained when the liquid is still from a predetermined position is determined from a value of differential pressure as mentioned above and a time change rate of the pressure of gas is added to the resultant value to determine a calculated liquid surface position of liquid. Actually, the surface position of the liquid varies due to gasification of the liquid. Therefore, the above-mentioned calculated liquid surface position is a calculated liquid surface position determined with respect to a liquid surface position corresponding to the surface position obtained when the liquid is still.

This calculation is represented by the formula below.

A depth of a predetermined position in gasifying means 2 from a predetermined liquid surface position of the liquid is taken as H (mm), and a differential pressure between a pressure in the gasifying means at the predetermined position and a pressure of the gas is measured, obtaining a differential pressure $\Delta P_H$. The resultant $H/\Delta P_H$ is defined as a coefficient. A calculated liquid surface position of the liquid is taken as Y (mm), a differential pressure after a period of time t (sec) from the start of control is taken as $\Delta P_t$ (kPa), and a pressure of the gas is taken as p (t).

When a time change rate of p(t), i.e., dp(t)/dt < 0.5 (kPa/sec), a calculated liquid surface position is represented as follows:

$$\texttt{Calculated liquid surface position Y = (H/}\Delta P_H\texttt{)} \times \Delta P_t$$

When a time change rate of p(t), i.e., dp(t)/dt $\geqq$ 0.5 (kPa/sec), a calculated liquid surface position is represented as follows:

$$\texttt{Calculated liquid surface position Y = 1.5H}$$

Calculated liquid surface position Y = 1.5H

With respect to the "liquid medium", there is no particular limitation as long as it is in a liquid state. The liquid medium may be either a single medium or a mixed medium comprised of two or more media, either an organic solvent or an inorganic solvent, or either a polar solvent or a nonpolar solvent. Preferred is a medium in a liquid state at room temperature under atmospheric pressure. Examples of liquid media include low boiling-point media having a boiling point of 50°C or lower, such as ethers, methylene chloride, and pentane; middle boiling-point media having a boiling point of 50 to 100°C, such as tetrahydrofuran (THF), ethyl acetate, chloroform, acetone, hexane, benzene, acetonitrile, and alcohols, e.g., ethanol and methanol; and high boiling-point media having a boiling point of 100°C or higher, such as toluene, xylene, propylene glycol monomethyl ether acetate (PGMEA), dimethyl formaldehyde (DMF), and dimethyl sulfoxide (DMSO).

The "mixture (liquid)" comprises a nonvolatile substance and a liquid medium, and may be either of a homogeneous system, e.g., in the state of suspension or emulsion, or of a heterogeneous system. As specific examples of mixtures, there can be mentioned liquid media which have been used as a solvent for synthesis, an extracting agent, a cleaning agent, an elution agent, a developing agent, an absorbent, a dispersion solvent, a diluent, or the like. Examples of treatments include solvents for fine chemical synthesis, cleaning for electronic substrate, liquid crystal film, and others, extraction of crude drugs and the like and separation and purification of the extract, and regeneration of liquid medium or cleaning liquid used in column chromatography, reversed phase chromatography, or the like.

The "liquid" involves a liquid medium and a mixture of the liquid medium and a nonvolatile substance.

The "nonvolatile substance" means a nonvolatile liquid or solid or a mixture thereof present in a liquid phase in a mixed liquid, together with the liquid medium. Specific examples include samples and extracts obtained using the liquid medium as a diluent or an extracting agent.

With respect to the "gas", there is no particular limitation as long as it is inert to the liquid medium and others treated and keeps in a gas state even when cooled by a coolant. Gas (e.g., carrier gas or detection gas) is appropriately selected depending on the conditions (e.g., conditions for gasification or condensation) determined according to the liquid medium treated. Specific examples of gas include air, nitrogen, helium, argon, and dried gas thereof, and preferred is nitrogen or air from the viewpoint of reducing the cost.

The "separated gas" means gas which has passed through the separating means. The liquid medium gasified (hereinafter, referred to simply as "gasified medium") is mixed with gas to form mixed gas, but, when it passes through the separating means, the gasified medium is condensed to be a liquid medium and separated from the gas, and hence the separated gas essentially does not contain the gasified medium. Therefore, the partial pressure of the gasified medium in the separated gas is so small that the medium is easily gasified when bringing the gas into contact with the medium. The separated gas may contain the gasified medium according to the conditions for separation, or the separated gas may contain the gasified medium according to the gasification conditions.

The "liquid surface of liquid" is a liquid surface of the liquid formed due to the storage of the above-mentioned liquid. The storage of the liquid means to store the liquid in, for example, a container constituting gasifying means 2, and the resultant surface of the liquid in the container corresponds to the liquid surface.

Hereinbelow, the above-mentioned gasifying means 2, separating means 4, pressure detecting means 6, differential pressure detecting means 7, and calculating means 8 will be described.

Gasifying means 2

As mentioned above, gasifying means 2 is a gasifying means in which one liquid selected from a liquid medium (e.g., a solvent) and a mixture of the liquid medium and a nonvolatile substance is stored to form a liquid surface of the liquid, and gasifies the liquid medium to form a gasified medium. In gasifying means 2, the surface position of the liquid varies due to gasification of the liquid, and possibly fluctuates due to vigorous gasification causing bubbling, such as a bumping phenomenon. Even when such a bumping phenomenon occurs, the liquid surface position of the liquid from a predetermined position in the gasifying means as a base position can be calculated by calculating means 8 based on the pressure in gasifying means 2 at the predetermined position and the pressure of the gas, determining a calculated liquid surface position. In gasifying means 2, for controlling the gasification rate of the liquid medium, the below-mentioned means for increasing the area of gas-liquid interface and auxiliary heating means can be used.

In gasifying means 2, the nonvolatile substance contained in the mixture is not gasified and only the liquid medium is gasified, and therefore the mixture is concentrated as the liquid medium is gasified. With respect to gasifying means 2 in the present invention, a means known as a concentrating means for liquid medium (e.g., the below-mentioned gasifying device 100 of Fig. 4) can be generally used.

With respect to the form of the gasifying means, there is no particular limitation as long as the form is resistant to both evacuation and pressurizing and a liquid surface of the liquid is formed in the gasifying means. The gasifying means preferably has the below-mentioned liquid surface varying means.

Separating means 4

As mentioned above, separating means 4 cools gas (e.g., carrier gas) and the gasified medium discharged from gasifying means 2 to condense the gasified medium, separating the condensed medium from the gas.

In separating means 4, a partially separating means for condensing part of the gasified medium obtained by gasifying the liquid medium by gasifying means 2 to separate the condensed medium from the remaining part of the gasified medium and the separated gas, a completely separating means for condensing all the gasified medium obtained by gasifying the liquid medium by the gasifying means to separate the condensed medium from the separated gas, or a combination of the partially separating means and the completely separating means can be used. A separation rate in separating means 4 is determined from a vapor pressure curve of the liquid medium in gasifying means 2 and a pressure of the gas, and can be controlled by changing the feed rate of the gas fed by the below-mentioned gas feeding means. The separation rate and the concentration ratio of the nonvolatile substance in the mixture are preferably determined taking into consideration the handling properties, cost, and the form of the nonvolatile substance obtained.

For example, when the gasification is conducted under conditions such that the pressure in gasifying means 2 is lower than atmospheric pressure (under a reduced pressure), a partially separating means is preferably used from an economical point of view. When the partially separating means is used under a reduced pressure, the gasified medium which is not separated by the partially separating means can optionally be fed to another separating means and separated under atmospheric pressure.

With respect to the conditions for separation in separating means 4, there is no particular limitation as long as those are temperature conditions such that the liquid medium gasified is condensed into liquid.

For improving the gasification-separation (recovery) efficiency, the condensation temperature for medium is preferably lower. The condensation temperature for low boiling-point medium is preferably 0 to -40°C, more preferably -10 to -40°C. The condensation temperature for middle boiling-point medium is preferably 10 to -30°C, more preferably 0 to -30°C. The condensation temperature for high boiling-point medium is preferably 20 to -20°C, more preferably 10 to -20°C. Alternatively, for reducing the cost, as mentioned above, by using a partially separating means under a reduced pressure and another separating means under atmospheric pressure in combination, the condensation temperature for the medium gasified and separated can be higher. The condensation temperature for low boiling-point medium is preferably 0 to -25°C, more preferably -5 to - 15°C. The condensation temperature for middle boiling-point medium is preferably 5 to -20°C, more preferably 5 to -10°C. The condensation temperature for high boiling-point medium is preferably 20 to 0°C, more preferably 20 to 10°C from the viewpoint of preventing the high boiling-point medium from freezing.

With respect to the flow rate of the gasified medium flowing through separating means 4, there is no particular limitation, but preferred is a flow rate which does not adversely affect the condensation of the gasified medium.

Separating means 4 in the present invention can be used in the form of a condenser for condensing solvent vapor. From the viewpoint of achieving high efficiency, it is the most preferred that the organic solvent purification-recovery apparatus of the present inventors (Japanese Patent No. 3244639) is used as a condenser.

Pressure detecting means 6

As mentioned above, pressure detecting means 6 detects a pressure of the gas. Pressure detecting means 6 (for example, compound gauge 160 of Fig. 4 is preferably used) detects a pressure of the gas and preferably measures a pressure in the range of from a positive pressure region to a negative pressure region. It is preferred that pressure detecting means 6 is an analogue instrument capable of outputting at a DC 4 to 20 mA or DC 1 to 5 V in the measurement range of, e.g., -100 to +100 kPa. When a partially separating means and a mixed gas feeding means are used as mentioned above, the pressure of the gas corresponds to a pressure of mixed gas of the gas and the gasified medium. A signal for a pressure of the gas is generated from pressure detecting means 6 and sent to calculating means 8.

Differential pressure detecting means 7

As mentioned above, differential pressure detecting means 7 detects a differential pressure between a pressure in gasifying means 2 at a predetermined position and the pressure of the gas using, e.g., a differential pressure gauge (preferably using the below-mentioned differential pressure gauge 180 of Fig. 4). The pressure in gasifying means 2 at a predetermined position is a pressure (head pressure) at the outlet formed below the liquid surface position of the liquid in gasifying means 2 (the below-mentioned detection tube 112 of Fig. 4 is preferably used), and corresponds to a head pressure indicated by a depth of the detection tube below the liquid surface from a liquid surface position corresponding to the surface position obtained when the liquid is still. The head pressure of the detection tube is an outlet pressure of gas (e.g., detection gas) filling the detection tube, and, when gas is allowed to flow the detection tube at a predetermined flow rate, the head pressure is substantially equal to a pressure of the liquid at the outlet of the detection tube, and the head pressure is considered to be the same as the pressure of the liquid at the outlet of the detection tube. A signal for a differential pressure between a pressure in gasifying means 2 at a predetermined position and the pressure of the gas is generated from differential pressure detecting means 7 and sent to calculating means 8.

It is preferred that the differential pressure gauge can measure 0 to a head pressure about twice the liquid surface position in a reaction vessel.

Calculating means 8

As mentioned above, a signal for a pressure of the gas is generated from pressure detecting means 6 and sent to calculating means 8, and a signal for a differential pressure between a pressure in gasifying means 2 at a predetermined position and the pressure of the gas is generated from differential pressure detecting means 7 and sent to calculating means 8. The signals generated are sent to calculating means 8. Calculating means 8 calculates the surface position of the liquid from the predetermined position in gasifying means 2 as a base position based on the pressure of the gas and the differential pressure to determine a calculated liquid surface position. It is preferred that the liquid surface position is calculated from the pressure of the gas and the differential pressure using, e.g., the above-mentioned formula. The differential pressure obtained by the differential pressure detecting means is calibrated using the pressure of the gas to obtain an accurate differential pressure, and, based on the resultant value and the volume (area and depth) of the liquid in gasifying means 2, a distance of the predetermined position in gasifying means 2 from a liquid surface position corresponding to the surface position obtained when the liquid is still is calculated to determine a calculated liquid surface position. The calculated liquid surface position is a liquid surface position corresponding to the surface position obtained when the liquid is still.

The gasifying-separating apparatus of the present invention can be used in, for example, a concentration-recovery apparatus for solvent. In this case, the gasifying-separating apparatus for liquid preferably has the below-mentioned liquid surface varying means, liquid feeding means, gas feeding means, stopping means, nonvolatile substance discharging means, and gas control means.

Liquid surface varying means

The liquid surface varying means can mechanically vary the liquid surface of the liquid, making it possible to actively increase the contact area between the gas and the liquid, thus controlling the gasification rate.

Examples of means for increasing the contact area between the gas and the liquid include a means having a flowing function in a container and a means utilizing flowing gas.

With respect to the means for mechanically varying the surface of the liquid, a container rotating-type varying means or container fixed-type varying means having an electric motor can be used. A container rotating-type varying means having an electric motor is of a container rotating type in which the container is rotated by means of the electric motor. With respect to the container rotating-type varying means of two types such that the rotating shaft is horizontal or at an angle, examples include means of a horizontal cylindrical form, a V form, a double cone form, a cube form, or a round-bottom flask form. On the other hand, a container fixed-type varying means having an electric motor is of a container fixed type in which a blade rotating by the electric motor is provided in the container and fluid in the container is allowed to flow by means of the blade. With respect to the container fixed-type varying means of two types such that the rotating shaft of the mixing blade is horizontal or at an angle, examples include means of a ribbon type, a screw type, or a paddle type.

The means utilizing flowing gas can actively bring gas into contact with a boundary portion between the liquid and the gas to increase the contact area between the gas and the liquid. The gas is brought into contact with the boundary portion and allowed to flow using a pump or the like to generate flowing gas, and the resultant flowing gas is applied to the liquid or the mixture is permitted to bubble. By bringing the flowing gas into contact with the boundary portion formed at an interface between the liquid and the gas as mentioned above, the medium gasified is moved from the boundary portion so that the boundary portion is always renewed, thus improving the efficiency of gasification.

With respect to gasifying means 2 having a liquid surface varying means, when the gasifying means is, for example, a small-scale device, preferred is a simple distillation apparatus, and, when the gasifying means is a up to 200 L-scale device, preferred is a large-sized rotary evaporator. When the gasifying means is a 200 to 10,000 L large-sized device, for example, gasifying-separating apparatus 10 has therein a liquid reservoir for the solvent gasified and separated, such as an agitation-type pressure resistant reaction vessel or a rotary conical-type condenser.

Liquid feeding means

The liquid feeding means comprises a gas circulation means, a gas control means, and a container for storing the liquid.

The liquid feeding means feeds the liquid to gasifying means 2 until the calculated liquid surface position reaches a first liquid surface position. The pressure of the gas in the gasifying means is reduced, and, in this state, the liquid is fed to gasifying means 2 (the below-mentioned container 110 of Fig. 4) by opening the connection with a container for storing the liquid (the below-mentioned unpurified crude liquid tank 156 of Fig. 4) {preferably using an automatic valve (not shown) provided in the below-mentioned pipe 22 of Fig. 4).

Gas feeding means

The gas feeding means comprises a gas circulation means and a gas control means.

Gas is circulated through gasifying-separating apparatus 10 by the gas circulation means (the below-mentioned pump 200 of Fig. 4) for feeding the gas in the form of gas (e.g., carrier gas) to the above-mentioned gasifying means 2. The gas control means (the below-mentioned intake vent 52, feed inlet 56, or exhaust vent 54 of Fig. 4) feeds or discharges the gas. By using the gas control means together with the gas circulation means, the pressure of the gas can be changed to feed the gas into gasifying-separating apparatus 10.

When the gas in gasifying-separating apparatus 10 is discharged from the apparatus, or when the gas is discharged from gasifying-separating apparatus 10 by the gas control means (the below-mentioned intake vent 52 or exhaust vent 54 of Fig. 4) for feeding gas from the outside of gasifying-separating apparatus 10, the pressure of the gas is reduced (evacuated). On the other hand, when the gas is fed from the outside of gasifying-separating apparatus 10, the pressure of the gas is increased (pressurized). The gas feeding means can be a mixed gas feeding means for feeding mixed gas of part of the gasified medium and the separated gas.

With respect to the pump (e.g., the below-mentioned pump 200 of Fig. 4), any pump having a chemical resistance can be used. For example, preferred is a pump for gas circulation, and especially preferred is a diaphragm pump having an inside made of a fluororesin. The pump is used under conditions such that no vapor mist is generated, enabling the gas to slowly circulate through gasifying means 2.
The pump having an ability to circulate gas through gasifying-separating apparatus 10 can be used. The gas feeding ability of the pump, in other words, delivery is appropriately selected depending on the whole capacity of the apparatus as mentioned below.

With respect to the gas transferring ability of the pump, an ability to transfer gas in a volume per minute in the range of from 0.1 to 10 times the total internal capacity of devices constituting the gasifying means and separating means in the present invention is required, but a pump having an ability to transfer gas in a volume per minute in the range of from 0.3 to 5 times the total internal capacity is preferably used. For example, when the total internal capacity of devices constituting the gasifying means and separating means is 30 L, a diaphragm pump made of a fluororesin having a pumping ability of 10 to 100 L/min can be used, but a diaphragm pump having a pumping ability of 20 to 40 L/min is preferably used.

An automatic valve is provided in a feed inlet or discharge outlet of the gas control means (the below-mentioned intake vent 52, feed inlet 56, or exhaust vent 54 of Fig. 4). Examples of automatic valves include a flow control device, an automatic valve having an orifice, a flow control valve, and a pressure control valve. An automatic valve is appropriately selected depending on the function of feeding or discharging and a predetermined flow rate.
A branch (not shown) is optionally formed at the feed inlet to gasifying means 2. The apparatus can be connected through a branch to another gasifying-separating apparatus. In such a case, one gasifying-separating apparatus is under partially condensing conditions under a reduced pressure and another is under (general) condensing conditions under atmospheric pressure, making it possible to improve the gasification-separation rate.

Stopping means

The stopping means stops the feeding of gas by the gas feeding means (the below-mentioned pump 200, intake vent 52, feed inlet 56, or exhaust vent 54 of Fig. 4) at a point in time when the calculated liquid surface position determined by calculating means 8 is higher than a second liquid surface position or the calculated liquid surface position is the same as a third liquid surface position.
The second liquid surface position is a position at which the feeding of gas is temporarily stopped, and corresponds to the height of bubbling caused as a bumping phenomenon. A bumping phenomenon is detected as fluctuation of the liquid surface position (e.g., bubbling having a height about 1.5 time the liquid surface position). Until the fluctuation terminates and the variation returned to noramal (e.g., for several seconds), the feeding of gas is stopped.
The third liquid surface position lower than the second liquid surface position is a liquid level at which the gasification-separation operation is stopped, and determined based on the amount of the liquid remaining in container 110.

Nonvolatile substance discharging means

The nonvolatile substance discharging means feeds gas to gasifying means 2 to increase the pressure in gasifying means 2, discharging the nonvolatile substance from gasifying means 2. After stopping the gasification-separation operation, gas is fed to increase the pressure of the gas, thus discharging the nonvolatile substance into a container to which the concentrated liquid is discharged (the below-mentioned residue tank 158 of Fig. 4).

Means which can be arbitrarily provided in the gasifying-separating apparatus of the present invention, e.g., a concentration and recovery apparatus for solvent, for example, a heating means and a gas cleaning means are described below (not shown).

In the present invention, for promoting gasification of the liquid in gasifying means 2, an auxiliary heating means (not shown) can be used. It is preferred that the liquid is gasified at a temperature of the boiling point of the liquid medium or lower. For example, with respect to the high boiling-point liquid medium having a boiling point of higher than 100°C, it is preferred that the temperature is controlled by changing the pressure so that the liquid vaporizes at 100°C or lower. With respect to the low boiling-point organic solvent, it is preferred that the temperature is controlled so that it is lower than the boiling point by 5 to 10°C. The liquid may be gasified at a temperature of the boiling point of the liquid medium or higher.
For heating the liquid to a temperature of the boiling point of the liquid medium or lower, in gasifying means 2, a portion for supporting the container for storing the liquid can also serve as a heating portion (not shown). When gasifying means 2 is a closed device, the heating means can be provided outside of the device to heat the whole of the device.

Gas cleaning means

The apparatus of the present invention can further comprise a gas cleaning means (not shown). The gas cleaning means is a means for removing fine particulate materials, acids, and alkalis (e.g., an adsorption filter or a cleaning trap). The gas cleaning means can be provided in any path in gasifying-separating apparatus 10 of the present invention, in which the gas cleaning means can be formed. For example, it is preferred that the gas cleaning means is provided at a path led from gasifying means 2 (e.g., pipe 28 or 30 of Fig. 4) or at a feed inlet (the below-mentioned gas feed inlet 114 of Fig. 4) through which gas (carrier gas) is fed to gasifying means 2.

A preferred mode of the present invention is such that gas is allowed to circulate through a closed system. Gas circulates through the apparatus under atmospheric pressure, making it possible to maintain high gasification-separation rate. Alternatively, a mode such that almost all the liquid medium is gasified and separated in a closed system and then part of the medium is permitted to leak to an open system can be selected. In the latter mode, part of the medium is permitted to leak to the atmosphere, but the medium is trapped by the gas cleaning means before released to the atmosphere, so that the amount of the medium released to the outside is as small as possible.

The material used in the apparatus of the present invention is a material being impermeable to gas and liquid and having a chemical resistance. The apparatus of the present invention including the gasifying portion need not be transparent, and can be opaque. Examples of the materials include inorganic materials, such as carbonaceous materials, glass, enamel, stainless steel, GL steel, GL stainless steel, and ceramics; organic materials, such as polyethylene, polypropylene, tetrafluoroethylene resins, trifluorochloroethylene resins, vinylidene fluoride resins, fluoroethylenepropylene resins, perfluoroalkoxy resins, unsaturated polyester, epoxy resins, vinyl ester resins, furan resins, and fluororesins; metal materials, such as metals, transition metals, noble metals, and alloys thereof, e.g., Al-Mg alloys, Cu alloys (such as Cu-Sn alloys, Sn-Zn alloys, Cu-AL alloys, and Cu-Ni alloys), and Ni alloys (such as Ni-Cu alloys, Ni-Mo alloys, and Ni-Cr alloys); composite materials; and materials which are not a material being impermeable to gas and liquid and having a chemical resistance, and which are coated with a material being impermeable to gas and liquid and having a chemical resistance. With respect to the material used in the apparatus, preferred is glass, a fluororesin, stainless steel, or GL stainless steel.

The present invention can be used in, for example, concentration of a solvent used in a reaction vessel or the like in the organic synthesis chemistry industry, concentration of an extract of natural substances, such as crude drugs, concentration of a trace component in environmental chemical analysis, concentration and recovery by means of a distillation apparatus, concentration of a liquid sample, and recovery of cleaning liquid for machine, mechanism part, substrate, mold, photoresist, and others.

Hereinbelow, the embodiment of the present invention will be described in detail with reference to the accompanying drawings.

A diagrammatic view of an apparatus for gasifying and separating a liquid medium and a mixture according to a preferred embodiment of the present invention is shown in Fig. 4.

As shown in Fig. 4, the apparatus for gasifying and separating a liquid medium and a mixture comprises gasifying device 100 corresponding to a gasifying means, separating device 140 corresponding to a separating means, compound gauge 160 corresponding to a pressure detecting means, differential pressure gauge 180 corresponding to a differential pressure detecting means, a calculating means, detection controlling device 300, and other attachment devices.

Gasifying device 100

Gasifying device 100 comprises container 110, and container 110 has detection tube 112 for detecting a pressure in container 110 at a predetermined position, feed inlet 114 through which gas is fed to container 110, transfer outlet 116 through which an unpurified crude liquid is fed into container 110 or the concentrated liquid is discharged, and temperature tube 118 having a temperature sensor for measuring a temperature of the solvent in container 110. The gasifying device optionally comprises a support which also serves as a heat source portion, and a liquid surface variation controlling means having an electric motor for mechanically varying the surface of the liquid (both of which are not shown). It is preferred that the predetermined position for detection tube 112 is lower than each of the first to third liquid surface positions.

It is preferred that container 110 has a continuous form, e.g., a flask form or a test tube form, having at one end a movable connecting portion to condenser 144 and concentrated (gasified and separated) liquid receiver 150.

The conduit provided in container 110 is appropriately used depending on the purpose or use. With respect to the conduit for transfer of gas, liquid, and the medium gasified (e.g., feed inlet 114 or conduit 116 of Fig. 4), a conduit having a large diameter is used. With respect to the detection tube for liquid surface position (e.g., detection tube 112 of Fig. 4), a slightly thinner conduit is used. With respect to the material for the conduit inserted into container 110 in gasifying means 2, a material having a resistance to solvent, such as a corrosion resistant metal, glass, polypropylene, or polyethylene, can be used, but a fluororesin is preferably used.

Temperature tube 118 detects a temperature in container 110 by means of the temperature sensor. The temperature sensor (designated by reference character "T" in Fig. 4) provided in temperature tube 118 is electrically connected to the below-mentioned detection controlling means 300 through wiring 314. An open square shown at the bottom of the temperature sensor (reference character "T") in Fig. 4 denotes an output portion for outputting a signal from the temperature sensor. The output portion of the temperature sensor sends a signal for a value of the detected temperature to detection controlling means 300.

When a liquid containing a low boiling-point liquid medium and a high boiling-point liquid medium is gasified and separated, an inflection point of the liquid indicating the end of gasification of the low boiling-point liquid medium is detected by the temperature sensor (e.g., a graph of Fig. 5). A solvent which is gasified and separated before the inflection point is the low boiling-point solvent, and a solvent which is gasified and separated after the inflection point is the high boiling-point solvent. At a point in time when the temperature reaches the inflection point, the circulation of gas through gasifying-separating apparatus 10 is stopped. Concentrated (recovered) liquid receiver 150 is replaced with another one, or the purified solvent is discharged from concentrated (recovered) liquid receiver 150 into purified-recovered medium liquid tank 154 for low boiling point. Then, the gasification-separation operation is restarted, and the high boiling-point solvent is separated to concentrated (recovered) liquid receiver 150 and discharged into purified-recovered medium liquid tank 154 for high boiling point.

Container 110 can be supported by a support (not shown), and the support can also serve as a heat source portion (not shown) to control the temperature of container 110. The heat source portion is electrically connected to detection controlling means 300 through wiring 312. An open square shown at the bottom of the heat source portion formed in the lower portion of container 110 in Fig. 4 denotes a driving system for driving the heat source portion, which comprises, e.g., an electric motor or a solenoid. Container 110 is heated according to a signal for drying the heat source portion. With respect to the heat source portion, from the viewpoint of the boiling point of liquid, a warm water bath, an oil bath, a heating support, or the like can be used. From the viewpoint of safety, preferred is a warm water bath.

For mechanically varying the surface of the liquid as mentioned above, container 110 can have a container rotating-type varying means or container fixed-type varying means having an electric motor. The container rotating-type varying means having an electric motor rotates the container by means of the electric motor to mechanically vary the surface of the liquid (e.g., a rotary evaporator is preferred). The container fixed-type varying means having an electric motor rotates a blade provided in the container to mechanically vary the surface of the liquid. The electric motor of the varying means is electrically connected to detection controlling means 300 through wiring 310. An open square shown below the container inlet in Fig. 4 denotes a driving system for driving the electric motor of the varying means, which comprises, e.g., an electric motor or a solenoid. The electric motor operates according to a control signal for drying the electric motor of the varying means to vary the surface of the liquid.

As mentioned above, gas feed inlet 114 is formed in the upper portion of container 110. The nozzle lower end of gas feed inlet 114 is opened so that the gas fed through gas feed inlet 114 can be discharged downwardly from the nozzle. When the nozzle lower end of gas feed inlet 114 is placed in a position higher than the surface position of the liquid placed in container 110 (e.g., higher than the second liquid surface position), the flowing gas can be applied to the liquid as mentioned above.

By discharging gas from the nozzle lower end of gas feed inlet 114 higher than the surface position of the solvent placed in container 110, gasification of the solvent is promoted. As mentioned above, outlet 142 to separating device 140 is formed in the upper portion of container 110, and the gasified medium is discharged from container 110 through outlet 122 to separating device 140.

On the other hand, when the nozzle lower end of gas feed inlet 114 is placed in a position lower than the surface position of the liquid placed in container 110 (e.g., lower than the second liquid surface position), the flowing gas can cause the mixture to bubble as mentioned above.

By discharging gas from the nozzle lower end of gas feed inlet 114 lower than the surface position of the solvent placed in container 110, gasification of the solvent is promoted.

As mentioned above, transfer outlet 116 through which the unpurified crude liquid is fed to container 110 or the concentrated liquid is discharged is formed in the upper portion of container 110. Transfer outlet 116 is connected to unpurified crude liquid tank 156 through pipe 22 and connected to concentrated liquid tank 158 through pipe 26.

An automatic valve (not shown) provided in pipe 22, through which the unpurified crude liquid is transferred, is electrically connected to detection controlling means 300 through wiring 332. An open square shown to the left of pipe 22 in Fig. 4 denotes a driving system for driving the automatic valve of pipe 22, which comprises, e.g., an electric motor or a solenoid. The automatic valve operates according to a control signal for drying the automatic valve of pipe 22.

An automatic valve (not shown) provided in pipe 26, through which the concentrated liquid is transferred, is electrically connected to detection controlling means 300 through wiring 334. An open square shown to the left of pipe 26 in Fig. 4 denotes a driving system for driving the automatic valve of pipe 26, which comprises, e.g., an electric motor or a solenoid. The automatic valve operates according to a control signal for drying the automatic valve of pipe 26.

Separating device 140

Separating device 140 comprises concentrated (recovered) liquid receiver 150 and condenser portion (condenser) 144 connected to the upper portion of the receiver.
Solvent vapor inlet 142 formed in around the lower end of condenser 144 is branched, and one end is connected to container 110 for feeding the gasified medium and another end is connected to concentrated (recovered) liquid receiver 150 for storing the condensed medium. Gas outlet 148 formed in the upper portion of condenser 144, through which the separated carrier gas is led from the condenser, is connected to differential pressure gauge 180 through pipe 28. Cooling coil 146 in a spiral form contained in condenser 144 is connected to a coolant reservoir having a feed pump (not shown).
The feed pump of the coolant reservoir feeds a coolant to cooling coil 146. The type and temperature of the coolant can be appropriately selected depending on a desired cooling temperature. The feed pump of the coolant reservoir is electrically connected to detection controlling means 300 through wiring 320. An open square shown to the left of separating device 140 in Fig. 4 denotes a driving system for driving the feed pump of the coolant reservoir, which comprises, e.g., an electric motor or a solenoid. A control signal for drying the feed pump of the coolant reservoir is generated from detection controlling means 300 and sent to the feed pump of the coolant reservoir. This control signal causes the feed pump of the coolant reservoir to feed a coolant to cooling coil 146.
Concentrated (recovered) liquid receiver 150 is connected to purified-recovered medium liquid tank 154 through pipe 24. An automatic valve (not shown) provided in pipe 24, through which the purified-recovered medium liquid is transferred, is electrically connected to detection controlling means 300 through wiring 330. An open square shown to the left of pipe 24 in Fig. 4 denotes a driving system for driving the automatic valve of pipe 24, which comprises, e.g., an electric motor or a solenoid. The automatic valve operates according to a control signal for drying the automatic valve of pipe 24.

Compound gauge 160

Gas outlet 148, through which the carrier gas separated from separating device 140 is led, is connected to pipe 28. The separated carrier gas is fed to compound gauge 160 through pipe 28.
One end of compound gauge 160 is connected to separating device 140 through pipe 28 and the other end is connected to pump 200. Further, compound gauge 160 is connected to differential pressure gauge 180 via pipe 30 through a branched connection formed in a portion of pipe 28 between separating device 140 and compound gauge 160.
A pressure of the gas is detected using compound gauge 160. Compound gauge 160 (designated by reference character and numeral "S2" in Fig. 4) is electrically connected to detection controlling means 300 through wiring 370. An open square shown to the right of compound gauge 160 (reference character and numeral "S2") in Fig. 4 denotes an output portion for outputting a signal from compound gauge 160. The output portion of compound gauge 160 sends a signal for a value of the detected pressure to detection controlling means 300.

Differential pressure gauge 180

Differential pressure gauge 180 is connected to the above-mentioned detection tube 112 provided in container 110 at a predetermined position (lower than the first liquid surface position) and connected to the above-mentioned gas outlet 148 formed in the upper portion of condenser 144. Detection tube 112 is connected to pipe 30 having formed therein feed inlet 56 through which the carrier gas is fed to detection tube 112, and feed inlet 56 has a flow control device or an automatic valve having several types of orifices (not shown).
Differential pressure gauge 180 detects a differential pressure between the pressure of liquid at the outlet of detection tube 112 (outlet pressure of detection tube 112) and the pressure of gas. Differential pressure gauge 180 (designated by reference character and numeral "S1" in Fig. 4) is electrically connected to detection controlling means 300 through wiring 360. An open square shown to the right of differential pressure gauge 180 (reference character and numeral "S1") in Fig. 4 denotes an output portion for outputting a signal from differential pressure gauge 180. The output portion of differential pressure gauge 180 sends a signal for a value of the differential pressure detected by differential pressure gauge 180 to detection controlling means 300.
Feed inlet 56 has a flow control device or an automatic valve having a plurality of arbitrary orifices (not shown). The automatic valve of feed inlet 56 controls the flow rate of the carrier gas fed to detection tube 112. The automatic valve of feed inlet 56 is electrically connected to detection controlling means 300 through wiring 354. An open square shown to the right of feed inlet 56 in Fig. 4 denotes a driving system for driving the automatic valve of feed inlet 56, which comprises, e.g., an electric motor or a solenoid. The large and small orifices of the automatic valve are switched according to a control signal for drying the automatic valve of feed inlet 56 to control the flow rate. Detection gas is fed to feed inlet 56 (intake arrow in Fig. 4).

Pump 200

The separated carrier gas is led from the above-mentioned gas outlet 148 formed in the upper portion of condenser 144. To gas outlet 148 is connected one end of pipe 28. Another end of pipe 28 is connected to inlet 202 of pump 200. In pump 200 is formed discharge outlet 204 through which the carrier gas fed is discharged. To pump 200 are connected intake vent 52 and exhaust vent 54.

To pump 200 is electrically connected a power source (not shown) for supplying electricity to pump 200. The carrier gas fed to inlet 202 is led from discharge outlet 204 and fed to feed inlet 114 of gasifying device 100. Pump 200 is electrically connected to detection controlling means 300 through wiring 340. An open square shown at the bottom of pump 200 in Fig. 4 denotes a driving system for driving pump 200 of pipe 24, which comprises, e.g., an electric motor or a solenoid. Pump 200 operates according to a control signal for drying the automatic valve of pump 200.

With respect to pump 200, preferred is a vacuum pump for gas circulation, and it is preferred that the pump has a chemical resistance. For example, the pump is preferably a vacuum pump made of a fluororesin.

Intake vent 52

Intake vent 52 has a flow control device or an automatic valve having a plurality of arbitrary orifices (not shown). Intake vent 52 introduces carrier gas into gasifying-separating apparatus 10 (intake arrow in Fig. 4). The automatic valve of intake vent 52 is electrically connected to detection controlling means 300 through wiring 350. An open square shown to the right of intake vent 52 in Fig. 4 denotes a driving system for driving the automatic valve of intake vent 52, which comprises, e.g., an electric motor or a solenoid. The automatic valve is opened or closed according to a control signal for drying the automatic valve of intake vent 52. The flow rate is preferably controlled by a flow control device, a needle valve, or a large or small orifice. From the viewpoint of reducing the cost and achieving high reliability, preferred is a needle valve or an orifice.

Exhaust vent 54

Exhaust vent 54 has a flow control device or an automatic valve having a plurality of arbitrary orifices (not shown). Exhaust vent 54 discharges the carrier gas from gasifying-separating apparatus 10 (exhaust arrow in Fig. 4). A branch (not shown) is optionally formed in a portion of pipe 20 between exhaust vent 54 and feed inlet 114. One end of the branch of pipe 20 is connected to feed inlet 114 of gasifying device 100 through a flow control valve (not shown), and another end is a pipe having one open end, and a pipe having an automatic valve at the end on the branched side and a pressure control valve at the open end (both of which are not shown) may be included. The pressure control valve is a valve which has a stop mechanism having a mechanism for opening the value due to the pressure of gas so that the value is opened or closed depending on the pressure. The pressure control valve is opened when the pressure in gasifying-separating apparatus 10 exceeds atmospheric pressure. The pipe having one end opened can be connected to another gasifying-separating apparatus or to pipe 30. Two or more gasifying-separating apparatuses can be connected through the branch. The automatic valve of exhaust vent 54 is electrically connected to detection controlling means 300 through wiring 352. An open square shown to the right of exhaust vent 54 in Fig. 4 denotes a driving system for driving the automatic valve of exhaust vent 54, which comprises, e.g., an electric motor or a solenoid. The automatic valve is opened or closed according to a control signal for drying the automatic valve of exhaust vent 54. A preferred form is similar to that of the automatic valve of intake vent 52.

Detection controlling means 300

Detection controlling means (device) 300 comprises a calculating means (device), a temperature controlling means (device), a liquid surface variation controlling means (device), a condenser controlling means (device), a pressure controlling means (device), a discharge controlling means (device) for residual volatile substance, a liquid feed controlling means (device), a gasification-separation controlling means (device), a stop controlling means (device), a discharge controlling means (device) for residue concentrated liquid, and a discharge controlling means (device) for purified-recovered liquid. The calculating means can use a value preliminarily determined by the individual controlling means (e.g., a pressure or a differential pressure) as a calculated liquid surface position. In gasifying-separating apparatus 10, by using a discharge controlling means for residual volatile substance, a liquid feed controlling means, a gasification-separation controlling means, a stop controlling means, a discharge controlling means for residue concentrated liquid, a discharge controlling means for purified-recovered liquid, and optionally other controlling means in combination in the below-mentioned flow, gasifying-separating apparatus 10 can be automatically controlled. Detection controlling means 300 preferably comprises a CPU (central processing unit), a ROM (read only memory), or a RAM (random access memory), which performs operation processing.

Temperature controlling means

The temperature controlling means judges whether the temperature is lower or higher than a predetermined temperature based on a signal for a value of the temperature detected by the temperature sensor. When the temperature controlling means judges the temperature to be lower than a predetermined temperature, it sends a signal for starting the heating to the heat source portion to heat container 110. When the temperature controlling means judges the temperature to be higher than a predetermined temperature, it sends a signal for stopping the heating to the heat source portion to stop the heating of container 110. Thus the temperature in container 110 is controlled to be a predetermined temperature.

Liquid surface variation controlling means

The liquid surface variation controlling means sends a control signal for mechanically varying the surface of the liquid in container 110 to an electric motor (not shown) of the container rotating-type varying means (rotary evaporator). This control signal causes the electric motor to rotate the rotary evaporator, mechanically varying the surface of the liquid.

Condenser controlling means

The condenser controlling means sends a control signal for operating condenser 140 to a feed pump of the coolant reservoir. This control signal causes the feed pump of the coolant reservoir to operate, feeding a coolant to cooling coil 146.

Pressure controlling means

With respect to the pressure controlling means, there is no particular limitation as long as it controls the inside of gasifying-separating apparatus 10 to be evacuated, under atmospheric pressure, or pressurized. The below-mentioned construction can be employed as an example.

A control signal for evacuating gasifying-separating apparatus 10 is sent to an automatic valve of intake vent 52, an automatic valve of exhaust vent 54 (both of which are not shown), and pump 200. This control signal causes the automatic valve of intake vent 52 to be closed, the automatic valve of exhaust vent 54 to be opened, and pump 200 to operate, so that the pressure of the gas in gasifying-separating apparatus 10 is reduced (evacuated).

A control signal for letting gasifying-separating apparatus 10 be under atmospheric pressure is sent to an automatic valve of intake vent 52, an automatic valve of exhaust vent 54 (both of which are not shown), and pump 200. This control signal causes the automatic valve of intake vent 52 to be opened, the automatic valve of exhaust vent 54 to be opened, and pump 200 to operate, so that the pressure of the gas in gasifying-separating apparatus 10 becomes the same as atmospheric pressure (under atmospheric pressure).

A control signal for pressurizing gasifying-separating apparatus 10 is sent to an automatic valve of intake vent 52, an automatic valve of exhaust vent 54 (both of which are not shown), and pump 200. This control signal causes the automatic valve of intake vent 52 to be opened, the automatic valve of exhaust vent 54 to be closed, and pump 200 to operate, so that the pressure of the gas in gasifying-separating apparatus 10 is increased (pressurized).

Discharge controlling means for residual volatile substance

(i) The discharge controlling means for residual volatile substance sends a control signal for discharging the volatile substance in pump 200 to an automatic valve of intake vent 52 and an automatic valve of exhaust vent 54 (both of which are not shown). This control signal causes the automatic valve of intake vent 52 to be opened, the automatic valve of exhaust vent 54 to be opened, and pump 200 to operate, so that the volatile substance remaining in pump 200 is discharged to clean the inside of pump 200.

(ii) Further, the discharge controlling means for residual volatile substance receives a control signal for discharging the volatile substance in pump 200, and then judges whether or not the value of operation time of pump 200 (e.g., 5 minutes) is the same as a value of a predetermined pump time for discharging the volatile substance. When the discharge controlling means for residual volatile substance judges the value to be the same as the value, it sends a control signal for closing the automatic valve of intake vent 52, closing the automatic valve of exhaust vent 54, and stopping pump 200 and sends a control signal indicating the termination of discharge of the residual volatile substance, thus terminating discharge of the residual volatile substance.

Liquid feed controlling means

The liquid feed controlling means comprises a calculating means.

(i) The liquid feed controlling means receives a control signal indicating the termination of discharge of the residual volatile substance from the discharge controlling means for residual volatile substance, or receives a signal indicating that the surface position of the liquid is a predetermined calculated liquid surface position (control signal for starting the feed of liquid) from the calculating means, and then, as mentioned above, sends a control signal for evacuating gasifying-separating apparatus 10 to an automatic valve of intake vent 52, an automatic valve of exhaust vent 54 (both of which are not shown), and pump 200.

(ii) The liquid feed controlling means judges whether or not the pressure of gas detected by compound gauge 160 is the same as a value obtained when the predetermined liquid is placed in the container. When the liquid feed controlling means judges the pressure of gas to be the same as the value, it sends a control signal for stopping pump 200 and a control signal for closing the automatic valve of exhaust vent 54, so that the pressure of the gas in gasifying-separating apparatus 10 becomes a value obtained when the predetermined liquid is placed in the container (e.g., -80 kPa).

(iii) The liquid feed controlling means sends a control signal for letting the outlet pressure of detection tube 112 of differential pressure gauge 180 be the same as a pressure obtained when the liquid is placed in the container to an automatic valve (not shown) of feed inlet 56. This control signal switches the orifice of the automatic valve of feed inlet 56 to a predetermined orifice suitable for the predetermined pressure obtained when the liquid is placed in the container. Then, the liquid feed controlling means sends a control signal for flowing detection gas through detection tube 112 of differential pressure gauge 180 so that the outlet pressure of detection tube 112 is equal to the pressure of the liquid at the outlet of detection tube 112 to an automatic valve (not shown) of feed inlet 56. This control signal causes the detection gas to flow through detection tube 112 at a predetermined flow rate, so that the outlet pressure of detection tube 112 becomes equal to the pressure of the liquid at the outlet of detection tube 112.

(iv) The liquid feed controlling means sends a control signal for feeding a liquid (unpurified crude liquid) to container 110 to an automatic valve (not shown) provided in pipe 22 through wiring 332. This control signal causes the automatic valve provided in pipe 22 to be opened, so that the liquid is transferred from unpurified crude liquid solvent tank 156 to container 110.

(v) The liquid feed controlling means judges whether or not the differential pressure detected by differential pressure gauge 180 is a value corresponding to the first liquid surface position. When the liquid feed controlling means judges the differential pressure to be a value corresponding to the first liquid surface position, a predetermined signal is given to the liquid feed controlling means and it sends a control signal for closing the automatic valve provided in pipe 22 and indicating the termination of feed of the liquid, so that the liquid is fed into container 110 to the first liquid surface position.

Gasification-separation controlling means

(i) The gasification-separation controlling means receives a control signal indicating the termination of feed of the liquid, or receives a control signal for starting the gasification-separation operation, and then allows carrier gas to circulate through gasifying-separating apparatus 10 and sends a control signal for starting the gasification-separation operation to an automatic valve of intake vent 52, an automatic valve of exhaust vent 54 (both of which are not shown), and pump 200. This control signal causes the automatic valve of intake vent 52 to be closed, the automatic valve of exhaust vent 54 to be closed, and pump 200 to operate, so that the carrier gas circulates through gasifying-separating apparatus 10 and the carrier gas is fed from feed inlet 114.

Stop controlling means

The stop controlling means receives a control signal for starting the gasification-separation operation, and then sends a control signal for adjusting the outlet pressure of detection tube 112 of differential pressure gauge 180 to a pressure for the gasification-separation operation to an automatic valve (not shown) of feed inlet 56. This control signal switches the orifice of the automatic valve of feed inlet 56 to a predetermined orifice for the gasification-separation operation. Then, the stop controlling means sends a control signal for flowing detection gas through detection tube 112 of differential pressure gauge 180 so that the outlet pressure of detection tube 112 is equal to the pressure of the liquid at the outlet of detection tube 112 to an automatic valve (not shown) of feed inlet 56. This control signal causes the detection gas to flow through detection tube 112 at a predetermined flow rate, so that the outlet pressure of detection tube 112 becomes equal to the pressure of the liquid at the outlet of detection tube 112.

The stop controlling means judges whether or not the differential pressure detected by differential pressure gauge 180 is a value more than the second liquid surface position. When the stop controlling means judges the differential pressure to be more than the second liquid surface position, it sends a control signal for stopping pump 200, thus stopping the gasification-separation operation.

The stop controlling means judges whether or not the differential pressure detected by differential pressure gauge 180 is a value corresponding to the third liquid surface position. When the stop controlling means judges the differential pressure to be a value corresponding to the third liquid surface position, it sends a control signal for stopping pump 200 and indicating the termination of gasification-separation operation, thus terminating the gasification-separation operation.

Discharge controlling means for residue concentrated liquid

The discharge controlling means for residue concentrated liquid receives a control signal indicating the termination of gasification-separation operation, or receives a control signal for starting the discharge of the residue concentrated liquid, and then, as mentioned above, sends a control signal for pressurizing gasifying-separating apparatus 10 to an automatic valve of intake vent 52, an automatic valve of exhaust vent 54 (both of which are not shown), and pump 200.

The discharge controlling means for residue concentrated liquid judges whether or not the pressure of gas detected by compound gauge 160 is the same as a value obtained when the predetermined residue concentrated liquid is discharged. When the discharge controlling means for residue concentrated liquid judges the pressure of gas to be the same as the value, it sends a control signal for closing the automatic valve of intake vent 52, closing the automatic valve of exhaust vent 54, and stopping pump 200, so that the pressure of the gas in gasifying-separating apparatus 10 becomes a value obtained when the predetermined residue concentrated liquid is discharged (e.g., +20 kPa).

The discharge controlling means for residue concentrated liquid sends a control signal for discharging the concentrated (recovered) liquid to concentrated liquid tank 158 to an automatic valve (not shown) provided in pipe 26 through wiring 334. This control signal causes the automatic valve provided in pipe 26 to be opened, so that the concentrated liquid is transferred from container 110 to concentrated liquid tank 158.

The discharge controlling means for residue concentrated liquid judges whether or not the pressure of gas detected by compound gauge 160 is the same as a value obtained when the discharge of the predetermined residue concentrated liquid is completed. When the discharge controlling means for residue concentrated liquid judges the pressure of gas to be the same as the value, it sends a control signal for closing the automatic valve provided in pipe 26 and indicating the termination of discharge of the residue concentrated liquid, so that the pressure of the gas in gasifying-separating apparatus 10 becomes a value obtained when the discharge of the predetermined residue concentrated liquid is completed (e.g., 1.0 kPa), thus terminating the discharge of the residue concentrated liquid.

Discharge controlling means for purified-recovered liquid

The discharge controlling means for purified-recovered liquid receives a control signal indicating the termination of discharge of the residue concentrated liquid, or receives a control signal for starting the discharge of the purified-recovered liquid, and then, as mentioned above, sends a control signal for pressurizing gasifying-separating apparatus 10 to an automatic valve of intake vent 52, an automatic valve of exhaust vent 54 (both of which are not shown), and pump 200.

The discharge controlling means for purified-recovered liquid judges whether or not the pressure of gas detected by compound gauge 160 is the same as a value obtained when the predetermined purified-recovered liquid is discharged. When the discharge controlling means for purified-recovered liquid judges the pressure of gas to be the same as the value, it sends a control signal for closing the automatic valve of intake vent 52, closing the automatic valve of exhaust vent 54, and stopping pump 200, so that the pressure of the gas in gasifying-separating apparatus 10 becomes a value obtained when the predetermined purified-recovered liquid is discharged (e.g., +20 kPa).

The discharge controlling means for purified-recovered liquid sends a control signal for discharging the purified-recovered liquid to purified-recovered liquid tank 154 to an automatic valve (not shown) provided in pipe 24 through wiring 330. This control signal causes the automatic valve provided in pipe 24 to be opened, so that the purified liquid is transferred from concentrated (recovered) liquid receiver 150 to purified-recovered liquid tank 154.

The discharge controlling means for purified-recovered liquid judges whether or not the pressure of gas detected by compound gauge 160 is the same as a value obtained when the discharge of the predetermined purified-recovered liquid is completed. When the discharge controlling means for purified-recovered liquid judges the pressure of gas to be the same as the value, it sends a control signal for closing the automatic valve provided in pipe 24 and indicating the termination of discharge of the purified-recovered liquid, so that the pressure of the gas in gasifying-separating apparatus 10 becomes a value obtained when the discharge of the predetermined purified-recovered liquid is completed (e.g., 1.0 kPa), thus terminating the discharge of the purified-recovered liquid.

The gasification-separation controlling means can be changed in mode as follows.
In the case where a liquid is partially condensed in gasifying-separating apparatus 10:

The gasification-separation controlling means sends a control signal for enabling the pressure control valve to operate to an automatic valve (not shown) provided in the branch of pipe 20. The gasification-separation controlling means causes the automatic valve provided in the branch of pipe 20 to be opened according to the control signal, enabling the pressure control valve to operate. Then, the gasification-separation controlling means sends a control signal for reducing the flow rate of a flow control valve to a flow control valve (not shown) provided in pipe 20. This control signal reduces the flow rate of the carrier gas and gasified medium fed to feed inlet 114 through the flow control valve provided in pipe 20, so that the inside of container 110 remains under a reduced pressured and the inside of pipe 20 is pressurized. The pressure in pipe 20 is adjusted to atmospheric pressure by means of the pressure control valve.

In the case where a liquid comprising a low boiling-point liquid medium and a high boiling-point liquid medium is gasified and separated in gasifying-separating apparatus 10 (under atmospheric pressure or a reduced pressure):

The gasification-separation controlling means sends a control signal for detecting an inflection point in the change of liquid temperature to a temperature sensor (not shown) of temperature tube 118. The gasification-separation controlling means judges whether or not the inflection point detected by the temperature sensor is an inflection point of a predetermined liquid. When the gasification-separation controlling means judges it to be the inflection point, as mentioned above, it sends a control signal for letting gasifying-separating apparatus 10 be under atmospheric pressure to an automatic valve of intake vent 52, an automatic valve of exhaust vent 54 (both of which are not shown), and pump 200. Then, as mentioned above, the gasification-separation controlling means sends a control signal for starting the discharge of the purified-recovered liquid to an automatic valve of intake vent 52, an automatic valve of exhaust vent 54 (both of which are not shown), and pump 200. As mentioned above, the gasification-separation controlling means sends a control signal for discharging the purified-recovered liquid to purified-recovered liquid tank 154 (tank for low boiling-point liquid medium) to an automatic valve (not shown) provided in pipe 24 through wiring 330. As mentioned above, the gasification-separation controlling means receives a control signal for starting the gasification-separation operation, and then allows carrier gas to circulate through gasifying-separating apparatus 10 and sends a control signal for starting the gasification-separation operation to an automatic valve of intake vent 52, an automatic valve of exhaust vent 54 (both of which are not shown), and pump 200, so that the gasification-separation operation for the low boiling-point liquid medium is conducted under atmospheric pressure and that for the high boiling-point liquid medium is conducted under a reduced pressure. If desired, by replacing purified-recovered liquid tank 154 into which the purified-recovered liquid is discharged, the low boiling-point liquid medium and the high boiling-point liquid medium can be fractionated.

With respect to the control of the gasification-separation operation, practical set values (kPa) for types of setting A to H and the purpose of setting are shown in Table 1. A set value can be appropriately selected by the above-mentioned calculating means depending on factors, such as a capacity of container 110 in gasifying means 2, a volume of the liquid at the first to third liquid surface positions, a viscosity of the liquid, and a boiling point of the liquid.
Table 1 Type of setting for pressure, practical set value, and purpose of setting

| Type of setting | Instrument | Compound gauge |
| --- | --- | --- |
| A | Differential pressure gauge | Charging by evacuation from unpurified crude liquid tank 156 to container 110 (Control of evacuation pressure) |
| B | Purpose of setting | First liquid surface position |
| C | Differential pressure gauge | Setting of lower limit of reduced pressure |
| D | Purpose of setting | Second liquid surface position |
| E | Purpose of setting | Third liquid surface position |
| F | Differential pressure gauge | Set value for changing reduced pressure to atmospheric pressure (Not 0) |

(continued)

| Type of setting | Instrument | Compound gauge |
|---|---|---|
| G | Differential pressure gauge | Setting of pressure for discharge and transfer of purified liquid and residue concentrated liquid (Pressure for discharge is changed depending on viscosity of concentrated liquid) |
| H | Differential pressure changed pressure gauge | Set value under atmospheric pressure conditions from pressurizing conditions (Setting of end point of discharge) |

Examples

Hereinbelow, the present invention will be described in more detail with reference to the following Examples, which should not be construed as limiting the scope of the present invention.

Recovery of solvent under reduced pressure conditions

Example 1

In apparatus 10 for gasifying and separating a liquid medium and a mixture of the present invention, container 110 (flask type; capacity: 10 L) was first warmed to 35°C using a warm water bath and a coolant (-10°C) was fed to condenser 140, and then rotation of container 110 (stirring) using a large-sized rotary evaporator for solvent evaporation was started, performing detection control for preparation of the operation.
Then, pump 200 was operated for about 5 minutes to discharge the residual volatile substance from the pump.
The apparatus (gasifying-separating apparatus 10) was evacuated to set value A-1 (-80.0 kPa) of compound gauge S2. Then, a methanol solution was charged from unpurified crude liquid tank 156.
A liquid surface position in the container was measured. Specifically, a comparison between a liquid surface position and set value B-1 (0.5 kPa) of differential pressure gauge S1 was made, and, when the liquid surface position was lower than set value B-1, a methanol solution was charged again from unpurified crude liquid tank 156. This control was repeated, and a point in time when the value of differential pressure gauge S1 reached a value higher than set value B-1 was determined as an end point of charging of the methanol solution.
Subsequently, a gasification-separation control was conducted. The gasification-separation control was conducted by evacuating the apparatus until a value reached set value C-1 (-96.0 kPa) of compound gauge S2. In this control, when the liquid surface position was higher than set value D-1 (0.7 kPa) of the differential pressure gauge (higher than the second liquid surface position), diaphragm pump 200 was temporarily stopped to prevent a bumping phenomenon, and the gasification-separation control was then conducted and a point in time when a value reached set value E-1 (0.2 kPa) of the differential pressure gauge was determined as an end point of the gasification-separation operation.
Atmospheric gas was permitted to flow the apparatus to pressurize the apparatus until a value reached set value F-1 (-1.0 kPa) of the compound gauge. Then, container 110 was pressurized until a value reached set value G-1 (+20.0 kPa) of the compound gauge, and the concentrated liquid (residue) remaining on the bottom of container 110 was discharged to concentrated liquid tank 158 and the container was maintain as such until a value reached set value H-1 (1.0 kPa) of the compound gauge. At a point in time when a value reached set value H-1, container 110 was pressurized again until a value reached set value G-1 (+20.0 kPa) of the compound gauge. Subsequently, the recovered liquid was discharged from solvent receiver 150 to purified-recovered liquid tank 154, and the apparatus was allowed to stand in this state until a value reached set value H of the compound gauge. After completion of a series of the above controls, the residual volatile substance in diaphragm pump 200 was discharged.
A series of the above detection controls was repeated to conduct the gasification-separation operation with respect to the whole amount of the unpurified crude liquid. Almost all (>99%) the purified methanol was recovered in solvent receiver 150 at a rate of about 120 ml/min.

Examples 2 to 9

Substantially the same procedure as in Example 1 was conducted except that the type of the solvent to be recovered and the temperature of the heating bath were changed as shown in Table 2.
The results of Examples 1 to 9 are shown in Table 2.

Table 2 Recovery of solvent under reduced pressure

| Example | Type of organic solvent recovered | Heating bath temperature (°C) | Flow rate for feed of solvent (ml/min) | Flow rate for recovery of organic solvent (ml/min) | Recovery rate of organic solvent (%) |
|---|---|---|---|---|---|
| 1 | Methanol | 35 | 5.0 | 120 | >99 |
| 2 | Methanol | 40 | 5.0 | 124 | >99 |
| 3 | Ethanol | 40 | 5.0 | 83 | >99 |
| 4 | Methylene chloride | 40 | 5.0 | 223 | >99 |
| 5 | Ethyl acetate | 40 | 5.0 | 194 | >99 |
| 6 | PGMEA | 80 | 5.0 | 93 | >99 |
| 7 | Toluene | 80 | 5.0 | 243 | >99 |
| 8 | Xylene | 80 | 5.0 | 188 | >99 |
| 9 | Water | 80 | 5.0 | 68 | >99 |

Recovery of solvent under atmospheric pressure conditions

Example 10

In the apparatus of the present invention, discharge of the residual volatile substance by the detection control for preparation of the operation, and the detection control for feeding of a liquid from the unpurified crude liquid tank were conducted in substantially the same manner as in Example 1 except that the temperature of the heating bath was 65°C.

Then, atmospheric gas was permitted to flow the apparatus until a value reached set value F-2 (-1.0 kPa) of the compound gauge, so that the pressure of gas became atmospheric pressure.

Subsequently, a gasification-separation control was conducted. In this control, while feeding gas to a container for gasification, a diaphragm pump was operated to keep set value C-2 (about -5 kPa) of compound gauge S2. Simultaneously, detection of a liquid surface position and recovery were conducted. A point in time when a value reached set value E-2 (0.2 kPa) of the differential pressure gauge was determined as an end point of the gasification-separation operation.

The subsequent detection controls including opening to the atmosphere, discharge of the concentrated liquid, and transfer of the recovered liquid were conducted in the same manner as in Example 1. Almost all (>99%) the purified methanol was recovered at a rate of about 37 ml/min.

Examples 11 to 17

Substantially the same procedure as in Example 10 was conducted except that the type of the organic solvent to be recovered, the temperature of the heating bath, and the diaphragm pump flow rate were changed as shown in Table 3. The results are shown in Table 3.

Table 3

| Example | Type of organic solvent recovered | Heating bath temperature (°C) | Flow rate for feed of solvent (ml/min) | Diaphrag m pump flow rate (ml/min) | Flow rate for recovery of organic solvent (ml/min) | Recovery rate of organic solvent (%) |
|---|---|---|---|---|---|---|
| 10 | Methanol | 65 | 5.0 | 32 | 37 | >99 |
| 11 | Methanol | 40 | 5.0 | 32 | 16 | >99 |

(continued)

| Example | Type of organic solvent recovered | Heating bath temperature (°C) | Flow rate for feed of solvent (ml/min) | Diaphrag m pump flow rate (ml/min) | Flow rate for recovery of organic solvent (ml/min) | Recovery rate of organic solvent (%) |
|---|---|---|---|---|---|---|
| 12 | Ethanol | 80 | 5.0 | 35 | 47 | >99 |
| 13 | Methylene chloride | 40 | 5.0 | 35 | 80 | >99 |
| 14 | Ethyl acetate | 80 | 5.0 | 35 | 108 | >99 |
| 15 | PGMEA | 80 | 5.0 | 35 | 8 | >99 |
| 16 | Toluene | 80 | 5.0 | 36 | 36 | >99 |
| 17 | Xylene | 80 | 5.0 | 35 | 13 | >99 |
| Note: 5 L of solvent was charged from unpurified crude liquid tank 156 to container 110 and gasification-separation control was started. | | | | | | |

Recovery of mixed solvent using atmospheric pressure conditions and reduced pressure conditions in combination

Example 18

In the apparatus of the present invention, discharge of the residual volatile substance by the detection control for preparation of the operation, and the detection control for feeding of a liquid from the unpurified crude liquid tank were conducted in the same manner as in Example 1.

Atmospheric gas was permitted to flow the apparatus until a value reached set value F-3 (-1.0 kPa) of the compound gauge, so that the pressure of gas became atmospheric pressure.

While conducting the gasification-separation control, a diaphragm pump was operated to keep set value C-3 (about -5 kPa) of compound gauge S2, detecting a liquid surface position. During this time, a change with time of the liquid temperature in container 110 was checked. After the start of recovery of the solvent and before an inflection point, a solvent having a lower boiling point was recovered. At a point in time when an inflection point was detected, the circulation of gas through the apparatus was temporarily stopped. Then, gasifying-separating apparatus 10 was evacuated again to start recovery of a high boiling-point solvent. The control was continued until a value reached set value E-3 (0.2 kPa) of the differential pressure gauge, and this point in time was determined as an end point of the gasification-separation operation.

The subsequent detection controls including opening to the atmosphere, discharge of the concentrated liquid, and transfer of the recovered liquid were conducted in the same manner as in Example 1. Almost all (>99%) the purified methanol and the high boiling-point solvent were recovered at a rate of about 30 ml/min and at a rate of about 65 ml/min, respectively.

A graph showing a change with time of the liquid temperature in container 110 for separating the low boiling-point solvent and high boiling-point solvent is shown in Fig. 5. A peak in the graph showing a change with time of the liquid temperature indicates an inflection point of the liquid temperature.

Example using high-temperature condenser and pressure control valve

Example 19

In the apparatus in the present Example, a flow control valve (needle valve) (not shown) is provided on the upstream side of an automatic valve (not shown) formed in conduit 20 connecting vacuum pump 200 and container 110. One conduit (not shown) of the branch on the upstream side of the needle valve is connected to vacuum pump 200, and the other conduit is led to the atmospheric side. At the outlet of the conduit open to the atmosphere is provided a pressure control valve (relief valve) (not shown) as a check valve. The pressure control valve is opened when the pressure in the pipe exceeds atmospheric pressure or closed when the pressure is lower than atmospheric pressure.

In gasifying-separating apparatus 10 of the present invention, discharge of the residual volatile substance by the detection control for preparation of the operation was conducted in the same manner as in Example 1.

Atmospheric gas was permitted to flow the apparatus until a value reached set value F-4 (-1.0 kPa) of the compound gauge, so that the pressure of gas became atmospheric pressure.

First, initial values for operation conditions and a predetermined value of reduced pressure (-75 kPa) for recovery of dioxane are set in the control instruments, so that the inside of the whole container is under a reduced pressure. The pressure in gasifying-separating apparatus 10 reaches a set reduced pressure, and then an automatic valve (not shown) provided in pipe 22 is opened to transfer the unpurified dioxane (about 500 ml) to container 110, followed by warming to 80°C.

Then, vacuum pump 200 is operated so that the inside of container 110 is under a reduced pressure (-75 kPa), starting an evaporation-recovery operation for dioxane. Specifically, the evaporated dioxane is condensed and recovered by condenser 144 through which a coolant at 15°C circulates. The control for the operation is made by measuring a time and operating vacuum pump 200 while measuring the amount of the dioxane recovered for a predetermined period of time and while appropriately operating the needle valve and pressure control valve to control the reduced pressure (-75 kPa). In this instance, a small amount of the gas discharged from vacuum pump 200 is circulated back to container 110 through a needle valve (not shown) and therefore, in this state, the dioxane vapor is prevented from being released to the atmospheric side. During this time, the dioxane vapor evaporated in container 110 was condensed and recovered by condenser 144 cooled to 15°C. After gasifying-separating apparatus 10 was operated for 8 minutes, the operation of vacuum pump 200 was stopped, and intake vent 52 was opened so that the pressure of the gas became atmospheric pressure, stopping the evaporation-recovery operation. As a result, 470 ml of dioxane was recovered in solvent receiver 150. Subsequently, the process is back to the first detection control. A series of the above recovery operations is automatically detection-controlled, automatically repeating the operations until purification of a predetermined amount of the solvent is completed. In the above step for solvent recovery, the solvent vapor which is not condensed by the condenser at 15°C is utilized as circulation gas, and therefore the recovery efficiency is improved by 35 to 45%, as compared to that in the case where the solvent vapor is not used as circulation gas under the same reduced pressure conditions.

The results are shown in Table 4.

Example 20

Substantially the same procedure as in Example 19 was conducted except that the type of the organic solvent to be recovered was changed to ethyl acetate and the temperature of the heating bath was changed to 60°C.

The results are shown in Table 4.

Example of recovery of dioxane using high-temperature condenser in open system to atmosphere

Example 21

In gasifying-separating apparatus 10 of the present invention, discharge of the residual volatile substance by the detection control for preparation of the operation was conducted in the same manner as in Example 1.

Then, atmospheric gas was permitted to flow the apparatus until a value reached set value F-5 (-1.0 kPa) of the compound gauge, so that the pressure of gas became atmospheric pressure.

Using gasifying-separating apparatus 10 described above in Example 19, an automatic valve (not shown) formed in conduit 20 connecting vacuum pump 200 and container 110 is closed and a needle valve (not shown) is opened, and vacuum pump 200 is operated in this state. In this instance, initial values for operation and a predetermined value of reduced pressure (-75 kPa) for recovery of dioxane are input into the control instruments, so that the inside of gasifying-separating apparatus 10 is under a reduced pressure, starting an evaporation-recovery operation for dioxane.

In this operation, the automatic valve provided in pipe 20 is closed, and then automatic valve 54 is opened and vacuum pump 200 is operated, and therefore the gas in gasifying-separating apparatus 10 is discharged to the outside, so that the inside of the apparatus is under a reduced pressure. The pressure in gasifying-separating apparatus 10 reaches a set value of reduced pressure, and then the automatic valve formed in pipe 22 is opened to transfer the unpurified dioxane (about 500 ml) to container 110. Then, container 110 was warmed to 80°C under a predetermined reduced pressure, and vacuum pump 200 was continuously operated to start an evaporation-recovery operation for dioxane.

The evaporated dioxane was condensed and recovered by condenser 144 through which a coolant at 15°C circulated. In this control, part of the dioxane vapor which is not condensed by the condenser at 15°C is released to the atmospheric side through the exhaust vent of vacuum pump 200, but this dioxane vapor is gasified and separated by another gasifying-separating apparatus (under atmospheric pressure conditions) connected to gasifying-separating apparatus 10.

Conditions for purification and recovery and recovery efficiency per unit time with respect to each of ethyl acetate and dioxane are shown in Table 4.

Example 22

Substantially the same procedure as in Example 21 was conducted except that the type of the organic solvent to be recovered was changed to ethyl acetate and the temperature of the heating bath was changed to 60°C. The results are shown in Table 4.

Table 4  Comparison in recovery efficiency between case where gas containing solvent vapor is circulated and case where it is not circulated

| Example | Type of organic solvent recovered | Heating bath (°C) | Cooler (°C) | Set pressure (kPa•G) | Flow control valve (Needle valve) | Pump flow rate (L/min) | Recovery efficiency (L/hr) | Condensation rate on atmospheric side (%) |
|---|---|---|---|---|---|---|---|---|
| 19 | Dioxane (bp.101°C) | 80 | 15 | -75~-77 | R | 12~15 | 3.5 | 3.2% |
| 20 | Ethyl acetate (bp.77°C) | 60 | 15 | -76~-78 | R | 8~10 | 5.5 | 4.2 |
| 21 | Dioxane | 80 | 15 | -75~-77 | C | 0 | 2.5 | 0.9% |
| 22 | Ethyl acetate | 60 | 15 | -76~-78 | C | 0 | 4.9 | 1.2 |

C: Closed   R: Reduced

Recovery of solvent under atmospheric pressure conditions

(Application to cleaning)

Example 23

The recovery of solvent in the present invention can be applied to separation of, from waste water (crude liquid) containing an organic solvent, a large amount of water (residue concentrated liquid) from which almost all the organic solvent is removed and a small amount of an aqueous solution of organic solvent (purified-recovered liquid) having a high organic solvent concentration. Therefore, the apparatus of the present invention can be utilized for the purpose of cleaning the waste water.
In the apparatus of the present invention, discharge of the residual volatile substance by the detection control for preparation of the operation, the detection control for feeding of a liquid from the unpurified crude liquid tank, and the gasification-separation control were conducted in substantially the same manner as in Example 10 except that the temperature of the heating bath was 40°C, and that gas feed inlet 114 through which gas is fed was formed at a position lower than the surface position of the crude liquid in container 110 and bubbling was conducted to improve the gasification efficiency.
The liquid was cleaned from 15.0% (before treatment) to 6.0% in terms of an acetone concentration, and almost all (>99%) the evaporated acetone, i.e., organic solvent to be recovered was recovered.
The results are shown in Table 5.

Examples 24 and 25

Substantially the same procedure as in Example 23 was conducted except that the temperature of the heating bath was changed from 40°C to 57°C in Example 24 and changed from 40°C to 70°C in Example 25.
The results are shown in Table 5.

Example 26

Substantially the same procedure as in Example 25 was conducted except that the organic solvent to be recovered was changed from acetone to acrylonitrile.
The results are shown in Table 5.

Table 5

| Example | Type of organic solvent recovered | Heating bath (°C) | Cooler (°C) | Set pressure (kPa•G) | Before treatment | | Residue concentrated liquid | | Purified-recovered liquid | |
|---|---|---|---|---|---|---|---|---|---|---|
| | | | | | (%) | (mL) | (%) | (mL) | (%) | (mL) |
| 23 | Acetone | 40 | -10 | 0 | 15.00 | 5,000 | 6.00 | 4,200 | 62.25 | 800 |
| 24 | Acetone | 57 | -10 | 0 | 15.00 | 5,000 | 4.40 | 3,900 | 52.58 | 1,100 |
| 25 | Acetone | 70 | -10 | 0 | 15.00 | 5,000 | 1.10 | 3,620 | 51.46 | 1,380 |
| 26 | Acrylonitrile | 70 | -10 | 0 | 2.00 | 5,000 | 0.03 | 3,620 | 7.17 | 1,380 |

The liquid was cleaned from 2.0% (before treatment) to 0.03% in terms of an acrylonitrile concentration, or cleaned from 15% (before treatment) to% in terms of an acetone concentration, and almost all (>99%) the evaporated solvent was recovered.

INDUSTRIAL APPLICABILITY

The method or apparatus of the present invention is a novel apparatus which is advantageous in that the subject of treatment, such as a liquid medium or a mixture, can be gasified and separated under any pressure operation conditions due to automatic control by measuring a varying liquid surface position of a liquid medium.
The apparatus of the present invention is advantageous in that a varying liquid surface position of a liquid medium can be measured with high accuracy, and hence the liquid medium can be prevented from suffering a bumping phenomenon without forming a barrier in the container for gasification, making it possible to simplify the structure of the portion for gasification and separation. In addition, the apparatus has high accuracy, and therefore achieves high reliability and safety when applied to large-scale productive facilities.
Further, in the apparatus of the present invention, the subjects of treatment involve any liquid media including low boiling-point liquid media and high boiling-point liquid media, and mixtures of a nonvolatile substance and a liquid medium. The apparatus of the present invention is advantageous not only in that it can evaporate and recover a solvent having a middle boiling point or low boiling point with high efficiency, but also in that the apparatus is useful for recovery of a high boiling-point liquid medium frequently used in production processes in industry.
The apparatus of the present invention is advantageous in that conditions for the apparatus can be arbitrarily selected, e.g., gas circulation method under atmospheric pressure, gasification and separation under a reduced pressure, or gasification and separation under conditions such that the vapor density is increased by slightly pressurizing, and the apparatus has many options of combinations of the conditions for recovery. Therefore, the apparatus can be applied to various uses, and there is no particular limitation with respect to the scale of the apparatus.
More specifically, the apparatus of the present invention has the following advantages.

(1) The apparatus can be automated, enabling a continuous operation. This is advantageous not only in that the power consumption due to turning on or off the apparatus can be reduced, but also in that failures or troubles due to turning on or off the relay can be prevented, and is preferred from the viewpoint of economy and maintenance of the facilities.

(2) A varying liquid surface position of a liquid medium can be measured with high accuracy, and therefore, with respect to the temperature conditions for separation, a temperature higher than a temperature generally used in the separation can be used. This is advantageous in that the apparatus can be operated under conditions such that the compressor of a cooling machine works to the best of its ability, achieving both economy and high gasification-separation rate. Particularly, the coolant facilities existing in the factory can be utilized in the apparatus and hence no additional investment is required, and further a good balance between the cooling ability and the gasification-separation efficiency is advantageously easily obtained.

Description of Reference Numerals

2: Gasifying means
4: Separating means
6: Pressure detecting means
7: Differential pressure detecting means
8: Calculating means
10: Gasifying-separating apparatus
11: Distilling round-bottom flask
12: Heating bath
13: Thermometer
14: Condenser
15: Recovery receiver
16: Coolant connection port
17: Column tower
18: Automatic valve
19: Automatic valve
20: Conduit
22: Conduit
24: Conduit
26: Conduit
28: Conduit
52: Intake vent
54: Exhaust vent
56: Feed inlet, Gas feed inlet
100: Gasifying device
110: Container
112: Detection tube
114: Gas feed inlet
116: Transfer outlet
118: Temperature tube
140: Separating device
142: Solvent vapor inlet (Lower vapor inlet), Solvent outlet
144: Condenser
146: Cooling coil
148: Gas outlet
150: Solvent receiver, Concentrated (recovered) liquid receiver
152: Concentrated (recovered) liquid receiver inlet 154: Purified-recovered medium liquid tank
156: Unpurified crude liquid solvent tank
158: Concentrated liquid tank, Residue tank
160: S1 Compound gauge
180: S2 Differential pressure gauge
200: Pump 200
202: Inlet
204: Discharge outlet
300: Detection controlling means
310: Wiring
312: Wiring
314: Wiring
320: Wiring
330: Wiring
332: Wiring
334: Wiring

340: Wiring
350: Wiring
352: Wiring
354: Wiring
360: Wiring
370: Wiring

**Claims**

1. An apparatus for gasifying and separating a liquid medium and a mixture, comprising a gasifying means, in which one liquid selected from a liquid medium and a mixture of the liquid medium and a nonvolatile substance is stored to form a liquid surface of the liquid, for gasifying the liquid medium to form a gasified medium, and a separating means for cooling gas and the gasified medium discharged from the gasifying means to condense the gasified medium, separating the condensed medium from the gas,
   the apparatus comprising:

   a pressure detecting means for detecting a pressure of the gas;
   a differential pressure detecting means for detecting a differential pressure between a pressure in the gasifying means at a predetermined position and the pressure of the gas; and
   a calculating means for calculating a liquid surface position of the liquid from the predetermined position as a base position based on the pressure of the gas and the differential pressure to determine a calculated liquid surface position,

   wherein the surface position of the liquid varies due to gasification of the liquid,
   wherein the calculated liquid surface position is a liquid surface position corresponding to the surface position obtained when the liquid is still.

2. The apparatus according to claim 1, further comprising a liquid surface varying means for mechanically varying the surface of the liquid,
   wherein the surface of the liquid is still when the feeding of gas to the gasifying means is stopped and the liquid surface varying means is stopped.

3. The apparatus according to claim 1 or 2, further comprising a liquid feeding means for feeding the liquid to the gasifying means until the calculated liquid surface position reaches a first liquid surface position.

4. The apparatus according to any one of claims 1 to 3, further comprising:

   a gas feeding means for feeding the gas to the liquid in the gasifying means; and
   a stopping means for stopping the feeding of gas by the gas feeding means at a point in time when the calculated liquid surface position is higher than a predetermined second liquid surface position or the calculated liquid surface position is the same as a third liquid surface position lower than the second liquid surface position.

5. The apparatus according to any one of claims 1 to 4, further comprising a nonvolatile substance discharging means for feeding gas to the gasifying means to increase the pressure in the gasifying means, discharging the nonvolatile substance from the gasifying means.

6. The apparatus according to any one of claims 1 to 5, wherein, when the gasification is conducted under conditions such that the pressure in the gasifying means is lower than atmospheric pressure,
   the separating means is a partially separating means for condensing part of the gasified medium to separate the condensed medium from the remaining part of the gasified medium and the gas, and
   the gas feeding means is a mixed gas feeding means for feeding mixed gas of part of the gasified medium and the gas.

# Fig. 1

# Fig. 2

# Fig. 3

# Fig. 4

# Fig. 5

## INTERNATIONAL SEARCH REPORT

| International application No. |
|---|
| PCT/JP2006/325032 |

A.  CLASSIFICATION OF SUBJECT MATTER
*B01D3/42*(2006.01)i, *B01D3/00*(2006.01)i

According to International Patent Classification (IPC) or to both national classification and IPC

B.  FIELDS SEARCHED

Minimum documentation searched (classification system followed by classification symbols)
B01D1/00-5/00, F22B37/78, G01F23/14-18

Documentation searched other than minimum documentation to the extent that such documents are included in the fields searched
Jitsuyo Shinan Koho        1922-1996    Jitsuyo Shinan Toroku Koho   1996-2007
Kokai Jitsuyo Shinan Koho   1971-2007    Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2000-202201 A  (Konica Corp.), 25 July, 2000 (25.07.00), Par. Nos. [0097] to [0121]; Figs. 1, 2, 4 (Family: none) | 1-6 |
| Y | JP 3488871 B2  (Kaneko Sangyo Co., Ltd., Macome Corp.), 19 January, 2004 (19.01.04), Par. Nos. [0036] to [0039] (Family: none) | 1-6 |

| ☒ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 January, 2007 (23.01.07) | 30 January, 2007 (30.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/325032

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 54879/1983 (Laid-open No. 158402/1984) (Sanyo Electric Co., Ltd.), 24 October, 1984 (24.10.84), Description, page 8, line 14 to page 9, line 5 (Family: none) | 4 |
| Y | JP 2001-79301 A  (Kabushiki Kaisha Chiyoda Corporation), 27 March, 2001 (27.03.01), Column 2, 3rd line from the bottom to 1st line from the bottom (Family: none) | 5 |
| Y | JP 2003-260301 A  (Ebara Corp.), 16 September, 2003 (16.09.03), Par. Nos. [0022] to [0026], [0042]; Fig. 5 (Family: none) | 6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI486978 B
- JP 2000202201 A
- JP HEI57301 B
- JP 2004148169 A
- JP HEI10328548 B
- JP 3244639 B